# EUROPEAN PATENT APPLICATION

(11) **EP 4 421 921 A1**
(43) Date of publication of application: **28.08.2024**
(21) Application number: 22883638.3
(22) Date of filing: 20.10.2022
(51) Int. Cl.: H01M 4/86, H01M 8/10, H01M 8/1004

(54) **MEMBRANE ELECTRODE ASSEMBLY AND POLYMER ELECTROLYTE FUEL CELL**

(30) Priority: 20.10.2021 JP 2021171309
(71) Applicant: Toppan Holdings Inc., Tokyo 110-0016 (JP)
(72) Inventor: MORIOKA, Hiroyuki, Tokyo 110-0016 (JP); OZAWA, Madoka, Tokyo 110-0016 (JP)
(74) Representative: Hoffmann Eitle
(86) International application number: PCT/JP2022/039165
(87) International publication number: WO 2023/068335

(57) **Abstract**

A membrane electrode assembly includes: a polymer electrolyte membrane; a pair of electrode catalyst layers disposed with the polymer electrolyte membrane therebetween while being in contact with a surface of the polymer electrolyte membrane; and a gas diffusion layer laminated on each of the pair of electrode catalyst layers. The gas diffusion layer includes a microporous layer in contact with the electrode catalyst layer and a diffusion substrate layer made of a fiber substrate. An average fiber diameter of a fiber material contained in the diffusion substrate layer is 10 times or more and 150 times of less of an average fiber diameter of the fibrous substance contained in the electrode catalyst layer.

## Description

### [Technical Field]

The present disclosure relates to membrane electrode assemblies and polymer electrolyte fuel cells.

### [Background Art]

Polymer electrolyte fuel cells include a membrane electrode assembly having a fuel electrode as an anode, an air electrode as a cathode, and a polymer electrolyte membrane sandwiched between the fuel electrode and the air electrode. Each of the fuel electrode and the air electrode includes a laminate of an electrode catalyst layer and a gas diffusion layer.

A fuel gas containing hydrogen is supplied to the fuel electrode, and an oxidant gas containing oxygen is supplied to the air electrode. From the fuel gas supplied to the fuel electrode, protons and electrons are generated by the action of the catalyst contained in the electrode catalyst layer. Protons are transferred by a polymer electrolyte contained in the electrode catalyst layer and the polymer electrolyte membrane, and migrate to the air electrode via the polymer electrolyte membrane. Electrons are extracted from the fuel electrode to an external circuit, and migrate to the air electrode via the external circuit. In the air electrode, the oxidant gas reacts with the protons and electrons, which have migrated from the fuel electrode, to generate water. The progress of such electrode reactions causes a current flow (see, e.g., PTLs 1 to 6).

### [Citation List]

### [Patent Literature]

PTL 1: JP 2006-120506 A
PTL 2: JP 2006-332041 A
PTL 3: JP 2007-87651 A
PTL 4: JP 2007-80726 A
PTL 5: JP 2006-252948 A
PTL 6: JP 2007-141588 A

### [Summary of Invention]

### [Technical Problem]

Substances involved in electrode reactions flow through pores formed in the electrode catalyst layers. For example, the fuel gas flows through the pores in the electrode catalyst layer of the fuel electrode to the reaction site in the fuel electrode. As the membrane electrode assembly is humidified, water that contributes to proton conduction flows through the pores in the electrode catalyst layer to the polymer electrolyte membrane. Further, the oxidant gas flows through the pores in the electrode catalyst layer of the oxygen electrode to reaction sites in the oxygen electrode. Water generated at the oxygen electrode is discharged from the oxygen electrode through the pores in the electrode catalyst layer of the oxygen electrode.

If excessive water stagnates in the electrode catalyst layer, migration of substances involved in the electrode reactions is hindered, resulting in poor power generation performance. In order to suppress occurrence of flooding, which is a phenomenon in which the electrode reactions are hindered by water stagnation, various improvements are proposed in PTLs 1 to 4, such as adjusting pore size in the electrode catalyst layer.

Meanwhile, for suitable proton conduction, it is desired that the polymer electrolyte membrane contains a moderate amount of water. Therefore, when operating under high humidification conditions in a high current region in which a large amount of water is generated, it is required to suppress the above-mentioned flooding, and when operating under low humidification conditions, it is required to suppress dry-up that decreases the water content of the polymer electrolyte membrane. For example, in PTL 5, an attempt is made to suppress both flooding and dry-up by providing a humidity control film between the electrode catalyst layer and the gas diffusion layer. Further, in PTL 6, an attempt is made to suppress both flooding and dry-up by providing grooves on a surface of the electrode catalyst layer that is in contact with the gas diffusion layer.

However, there is still room for improvement in configuration of the membrane electrode assembly from the perspective of obtaining a membrane electrode assembly that exhibits high power generation performance in both high and low humidification conditions while suppressing both flooding and dry-up by improving the materials of the electrode catalyst layer and the gas diffusion layer.

### [Solution to Problem]

A membrane electrode assembly for solving the above problem includes: a polymer electrolyte membrane; a pair of electrode catalyst layers disposed with the polymer electrolyte membrane therebetween, each of the pair of electrode catalyst layers being in contact with a surface of the polymer electrolyte membrane; and a gas diffusion layer laminated on each of the pair of electrode catalyst layers, the gas diffusion layer including a microporous layer in contact with the electrode catalyst layer and a diffusion substrate layer made of a fiber substrate, wherein at least one of the pair of electrode catalyst layers is a target catalyst layer containing catalyst-supporting particles, a polymer electrolyte and a fibrous substance, the diffusion substrate layer penetrates into at least part of the microporous layer, and in the gas diffusion layer laminated on the target catalyst layer, an average fiber diameter of a fiber material contained in the diffusion substrate layer is 10 times or more and 150 times or less of an average fiber diameter of the fibrous substance contained in the target catalyst layer.

With this configuration, the size of pores in the target catalyst layer is appropriately balanced with the size of pores in the gas diffusion layer. As a result, the membrane electrode assembly has a suitable moisture state under both high and low humidification conditions, resulting in high power generation performance in the fuel cell.

In the membrane electrode assembly having the above configuration, the gas diffusion layer may include a first region composed of only the microporous layer, a second region in which the diffusion substrate layer penetrates into the microporous layer, and a third region composed of only the diffusion substrate layer, and the first region may be in contact with the electrode catalyst layer, and the second region may be sandwiched between the first region and the third region in a thickness direction of the gas diffusion layer.

With this configuration, compared with the case where the gas diffusion layer does not include the first region, the size of voids varies more gradually in a stepwise manner from the target catalyst layer toward a surface of the gas diffusion layer on a side opposite to that facing away from the target catalyst layer. This ensures that the substances involved in electrode reactions can be more smoothly supplied and discharged. As a result, the above effects due to the average fiber diameter can be more suitably achieved.

In the membrane electrode assembly having the above configuration, the fibrous substance contained in the target catalyst layer contains at least one of electron-conducting fibers and polymer fibers.

With this configuration, due to the fibrous substance contained, proton conductivity or electron conductivity can be improved.

A polymer electrolyte fuel cell for solving the above problem includes: the membrane electrode assembly described above; and a pair of separators sandwiching the membrane electrode assembly.

With this configuration, high power generation performance can be achieved under both high and low humidification conditions.

### [Advantageous Effects of Invention]

According to the present disclosure, high power generation performance can be achieved under both high and low humidification conditions.

### [Brief Description of Drawings]

Fig. 1 is a diagram illustrating a cross-sectional structure of a membrane electrode assembly according to an embodiment.
Fig. 2 is a diagram schematically illustrating a configuration of a gas diffusion layer according to an embodiment.
Fig. 3 is an exploded perspective view of a structure of a polymer electrolyte fuel cell according to an embodiment.

### [Description of Embodiments]

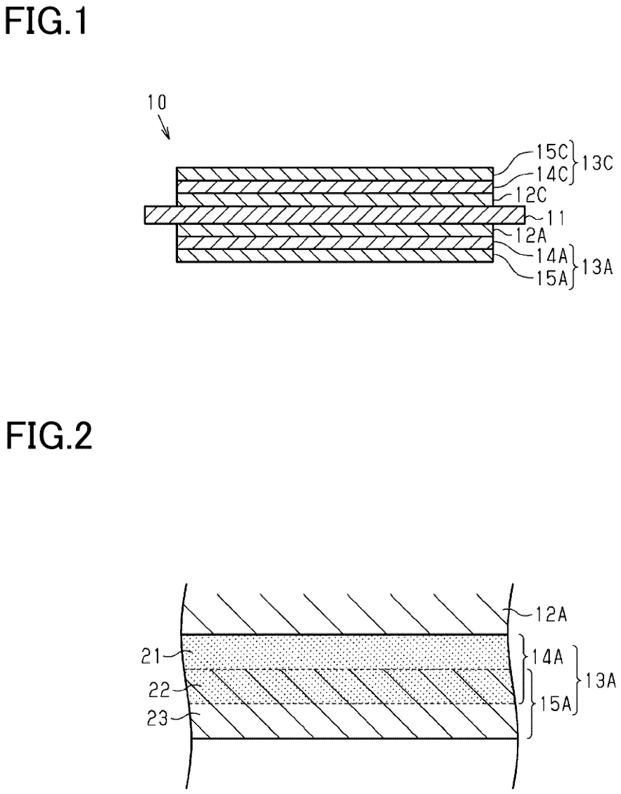

With reference to Figs. 1 to 3, an embodiment of a membrane electrode assembly and a polymer electrolyte fuel cell will be described. It should be noted that the term "at least one of A and B" as used herein refers to "only A, only B, or both A and B".

### [Membrane Electrode Assembly]

As shown in Fig. 1, a membrane electrode assembly 10 includes a polymer electrolyte membrane 11, a pair of electrode catalyst layers 12A and 12C, and a pair of gas diffusion layers 13A and 13C. The gas diffusion layer 13A includes a microporous layer 14A made of a porous material and a diffusion substrate layer 15A made of a fiber substrate. Similarly, the gas diffusion layer 13C includes a microporous layer 14C made of a porous material and a diffusion substrate layer 15C made of a fiber substrate.

The polymer electrolyte membrane 11 is sandwiched between the electrode catalyst layer 12A and the electrode catalyst layer 12C. The electrode catalyst layer 12A is in contact with one of two surfaces of the polymer electrolyte membrane 11, and the electrode catalyst layer 12C is in contact with the other of the two surfaces of the polymer electrolyte membrane 11.

The gas diffusion layer 13A is laminated on the electrode catalyst layer 12A, and the gas diffusion layer 13C is laminated on the electrode catalyst layer 12C. In other words, a laminate of the polymer electrolyte membrane 11, the electrode catalyst layer 12A and the electrode catalyst layer 12C is sandwiched between the gas diffusion layer 13A and the gas diffusion layer 13C.

The electrode catalyst layer 12A and the gas diffusion layer 13A constitute a fuel electrode, which is an anode of the polymer electrolyte fuel cell. The electrode catalyst layer 12C and the gas diffusion layer 13C constitute an air electrode, which is a cathode of the polymer electrolyte fuel cell.

When viewed from a position facing one of the surfaces of the polymer electrolyte membrane 11, the outer shapes of the electrode catalyst layers 12A and 12C are substantially the same as the outer shapes of the gas diffusion layers 13A and 13C, and smaller than the outer shape of the polymer electrolyte membrane 11. The outer shapes of the respective layers 12A, 12C, 13A and 13C, and the outer shape of the polymer electrolyte membrane 11 are not specifically limited, and may be a rectangular, for example.

Fig. 2 is an enlarged view schematically illustrating a cross-sectional structure of a portion in which the electrode catalyst layer 12A and the gas diffusion layer 13A are laminated each other. In Fig. 2, in order to facilitate understanding, a portion in which the microporous layer 14C is located is shown dotted.

As shown in Fig. 2, the microporous layer 14A is in contact with the electrode catalyst layer 12A, and the microporous layer 14A and the diffusion substrate layer 15A have overlap in the thickness direction. The outermost surface of the gas diffusion layer 13A on a side opposite to that facing the electrode catalyst layer 12A is a surface of the diffusion substrate layer 15A.

The gas diffusion layer 13A preferably includes a first region 21 composed of only the microporous layer 14A, a second region 22 composed of both the microporous layer 14A and the diffusion substrate layer 15A, and a third region 23 composed of only the diffusion substrate layer 15A. In the second region 22, the diffusion substrate layer 15A penetrates into the microporous layer 14A. In other words, the second region 22 has a structure in which the porous material constituting the microporous layer 14A penetrates between fibers of the diffusion substrate layer 15A.

The first region 21, the second region 22 and the third region 23 are arranged in the thickness direction of the gas diffusion layer 13A in this order from a position close to the electrode catalyst layer 12A. That is, the first region 21 is in contact with the electrode catalyst layer 12A, the third region 23 is located on the outermost side of the gas diffusion layer 13A, and the second region 22 is sandwiched between the first region 21 and the third region 23.

The gas diffusion layer 13A may not necessarily include the first region 21, and may be composed of the second region 22 and the third region 23. In other words, the gas diffusion layer 13A may not necessarily include a region composed of only the microporous layer 14A. In this case, the second region 22 is in contact with the electrode catalyst layer 12A. That is, the microporous layer 14A and the diffusion substrate layer 15A are in contact with the electrode catalyst layer 12A.

The gas diffusion layer 13C has the same configuration as that of the gas diffusion layer 13A. That is, the microporous layer 14C is in contact with the electrode catalyst layer 12C, and the diffusion substrate layer 15C penetrates into at least part of the microporous layer 14C. The gas diffusion layer 13C preferably includes a first region composed of only the microporous layer 14C, a second region composed of both the microporous layer 14C and the diffusion substrate layer 15C, and a third region composed of only the diffusion substrate layer 15C in this order from a position close to the electrode catalyst layer 12C, but the first region may not necessarily be provided.

The materials of each layer constituting the membrane electrode assembly 10 will be described below.

The polymer electrolyte membrane 11 contains a polymer electrolyte. The polymer electrolyte used for the polymer electrolyte membrane 11 may be a proton-conducting polymer electrolyte, and may be, for example, a fluorine-based polymer electrolyte or a hydrocarbon-based polymer electrolyte. Examples of the fluorine-based polymer electrolyte include Nafion (registered trademark) manufactured by DuPont, Flemion (registered trademark) manufactured by Asahi Glass Co., Ltd, Aciplex (registered trademark) manufactured by Asahi Kasei Corporation and Gore-Select (registered trademark) manufactured by Gore. Examples of the hydrocarbon-based polymer electrolyte include sulfonated polyether ketone, sulfonated polyether sulfone, sulfonated polyether ether sulfone, sulfonated polysulfide and sulfonated polyphenylene.

The electrode catalyst layers 12A and 12C contain catalyst-supporting particles and aggregates of polymer electrolyte. The catalyst-supporting particles are carriers that support a catalyst substance. Further, at least one of the electrode catalyst layer 12A and the electrode catalyst layer 12C contains a fibrous substance. In the electrode catalyst layers 12A and 12C, the aggregates of polymer electrolyte and the fibrous substance are present around the dispersed catalyst-supporting particles, and pores are formed between these components.

The catalyst substance has a particulate form. From the viewpoint of improving the activity of the catalyst substance, the catalyst particles preferably have an average particle size of 20 nm or less, and more preferably 5 nm or less. From the viewpoint of stabilizing the activity of the catalyst particles, the catalyst particles preferably have an average particle size of 0.5 nm or greater, and more preferably 1 nm or greater. Examples of the material of the catalyst substance include platinum group metals, metals other than the platinum group, alloys of these metals, oxides of these metals and double oxides of these metals. The platinum group metals include platinum, palladium, ruthenium, iridium, rhodium and osmium. The metals other than the platinum group include iron, lead, copper, chromium, cobalt, nickel, manganese, vanadium, molybdenum, gallium and aluminum. From the viewpoint of improving the activity of the catalyst substance, the material of the catalyst substance is preferably platinum or a platinum alloy.

The carriers are particles that are not eroded by the catalyst substance and are electrically conductive. An example of the carrier is carbon particles. From the viewpoint of facilitating formation of conductive paths for electrons, the carrier preferably has a particle size of 10 nm or more. From the viewpoint of reducing the resistance value of the electrode catalyst layers 12A and 12C and increasing the amount of catalyst particles supported, the carrier preferably has a particle size of 1,000 nm or less, and more preferably 100 nm or less.

Specific examples of the carrier include carbon black, graphite, black lead, activated carbon and fullerenes. The carbon black may be, for example, acetylene black, furnace black and Ketjen black.

The carrier may be covered with a hydrophobic coating. The hydrophobic coating imparts hydrophobicity to the carrier, and has gas permeability that allows fuel gas and oxidant gas to permeate. From the viewpoint of improving the gas permeability, the hydrophobic coating preferably has a thickness of 40 nm or less. From the viewpoint of improving water discharge capability of the electrode catalyst layers 12A and 12C, the hydrophobic coating preferably has a thickness of 2 nm or greater.

Examples of the material of the hydrophobic coating include a fluorine-based compound having at least one polar group. Examples of the polar group include a hydroxyl group, an alkoxy group, a carboxyl group, an ester group, an ether group, a carbonate group and an amide group. The hydrophobic coating having polar groups is likely to be fixed to the outermost surface of the carrier. An example of a portion of the fluorine-based compound other than the polar groups is a fluoroalkyl skeleton.

The polymer electrolyte constituting the aggregates may be a proton-conducting polymer electrolyte, and examples thereof include a fluorine-based polymer electrolyte and a hydrocarbon-based polymer electrolyte. Examples of the fluorine-based polymer electrolyte include Nafion (registered trademark) manufactured by DuPont, Flemion (registered trademark) manufactured by Asahi Glass Co., Ltd, Aciplex (registered trademark) manufactured by Asahi Kasei Corporation and Gore-Select (registered trademark) manufactured by Gore. Examples of the hydrocarbon-based polymer electrolyte include sulfonated polyether ketone, sulfonated polyether sulfone, sulfonated polyether ether sulfone, sulfonated polysulfide and sulfonated polyphenylene.

When the polymer electrolyte constituting the aggregates and the polymer electrolyte constituting the polymer electrolyte membrane 11 are the same type electrolytes, the electrode catalyst layers 12A and 12C have high adhesion to the polymer electrolyte membrane 11.

The fibrous substance may be electron-conducting fibers or polymer fibers. The electron-conducting fibers are fibers made of an electron-conducting material, and may be, for example, carbon fibers. The polymer fibers are fibers made of a polymer material, and may be, for example, proton-conducting fibers or fibers having Lewis acidic or Lewis basic functional groups. The proton-conducting fibers are fibers made of a proton-conducting polymer electrolyte. The electrode catalyst layers 12A and 12C may contain only one type of fibrous substance or two or more types of fibrous substances. For example, the electrode catalyst layers 12A and 12C may contain only electron-conducting fibers or only polymer fibers as the fibrous substance. Alternatively, the electrode catalyst layers 12A and 12C may contain both electron-conducting fibers and polymer fibers as the fibrous substance.

Due to the electrode catalyst layers 12A and 12C having the fibrous substance, the electrode catalyst layers 12A and 12C have high strength, which facilitates formation of the electrode catalyst layers 12A and 12C and prevents occurrence of cracking in the electrode catalyst layers 12A and 12C. This also improves durability of the membrane electrode assembly 10.

Examples of the electron-conducting fibers include carbon fibers, carbon nanotubes, carbon nanohorns and electrically conductive polymer nanofibers. From the viewpoint of improving conductivity of the electrode catalyst layers 12A and 12C and improving dispersibility in the coating liquid for forming the electrode catalyst layers 12A and 12C, the fibrous substance is preferably carbon nanofibers or carbon nanotubes.

Examples of the material of the proton-conducting fiber include a fluorine-based polymer electrolyte and a hydrocarbon-based polymer electrolyte. Examples of the fluorine-based polymer electrolyte include Nafion (registered trademark) manufactured by DuPont, Flemion (registered trademark) manufactured by Asahi Glass Co., Ltd, Aciplex (registered trademark) manufactured by Asahi Kasei Corporation and Gore-Select (registered trademark) manufactured by Gore. Examples of the hydrocarbon-based polymer electrolyte include sulfonated polyether ketone, sulfonated polyether sulfone, sulfonated polyether ether sulfone, sulfonated polysulfide and sulfonated polyphenylene.

When the polymer electrolytes constituting each of the polymer electrolyte membrane 11, the aggregates of polymer electrolyte and the proton-conducting fibers are the same electrolytes, the electrode catalyst layers 12A and 12C have high adhesion to the polymer electrolyte membrane 11.

The polymer fibers having the above functional groups contain Lewis acidic or Lewis basic functional groups in the molecular structure of the material. Accordingly, the polymer electrolyte tends to present around the fibrous substance. Examples of the fibrous substance having Lewis acidic functional groups include hydrophilic carbon fibers, and polymer fibers having hydroxyl groups, carbonyl groups, sulfonic acid groups or phosphorous acid groups. Examples of the fibrous substance having Lewis basic functional groups include polymer fibers having an imide structure, an azole structure, and the like. Since Lewis acidic functional groups in the fibrous substance bind by hydrogen bonds to the proton-conducting sites such as sulfonyl groups contained in the polymer electrolyte, the polymer electrolyte tends to present around the fibrous substance. On the other hand, when the fibrous substance contains Lewis basic functional groups, the Lewis basic functional groups and the acidic proton-conducting sites such as sulfonyl groups contained in the polymer electrolyte bind to each other by acid-base bonds, and thus the polymer electrolyte tends to present around the fibrous substance. Since acid-base bonds have a stronger bonding force than hydrogen bonds, it is preferred that the fibrous substance contains Lewis basic functional groups. In particular, the fibrous substance preferably has an azole structure. The azole structure is a five-membered heterocyclic structure containing one or more nitrogen atoms, and examples thereof include an imidazole structure and an oxazole structure. A substance containing nitrogen atoms preferably has a benzazole structure, such as a benzoimidazole structure or a benzoxazole structure. Specific examples of the substance containing nitrogen atoms include polymers such as polybenzoimidazole and polybenzoxazole.

The fibrous substance preferably has an average fiber diameter dm of 10 nm or greater and 300 nm or less, and more preferably 100 nm or greater and 200 nm or less. With the average fiber diameter dm within the above range, pores are reliably formed in the electrode catalyst layers 12A and 12C.

The microporous layers 14A and 14C are composed of a mixture of water-repellent resin and conductive material. Examples of the water-repellent resin include fluororesins such as polytetrafluoroethylene (PTFE), perfluoroethylene-propene copolymer (FEP) and tetrafluoroethylene-ethylene copolymer resin (ETFE). The examples of the conductive material include carbon materials such as carbon black and graphite.

The diffusion substrate layers 15A and 15C are gas permeable layers and are electrically conductive. The diffusion substrate layers 15A and 15C may be, for example, substrates made of carbon fibers. Examples of the diffusion substrate layers 15A and 15C include carbon cloth, carbon paper, carbon felt, and the like.

The fiber material contained in the diffusion substrate layers 15A and 15C preferably has an average fiber diameter dg of 0.1 µm or greater and 45 µm or less, and more preferably 1 µm or greater and 30 µm or less. With the average fiber diameter dg within the above range, suitable gas diffusivity is obtained in the gas diffusion layers 13A and 13C.

The average fiber diameter dg of the fiber material contained in the diffusion substrate layers 15A and 15C is 10 times or more and 150 times of less the average fiber diameter dm of the fibrous substance contained in the electrode catalyst layers 12A and 12C.

Inside the electrode catalyst layers 12A and 12C and the gas diffusion layers 13A and 13C, fine voids are formed which serve as paths for gas and water involved in electrode reactions. The average fiber diameter dm of the fibrous substance is a main factor regulating the size of pores which are the voids formed in the electrode catalyst layers 12A and 12C. Further, the average fiber diameter dg in the diffusion substrate layers 15A and 15C is a main factor regulating the size of the voids formed in the gas diffusion layers 13A and 13C. In particular, the average fiber diameter dg in the diffusion substrate layers 15A and 15C is a main factor regulating the size of pores which are the voids formed in the regions in which the diffusion substrate layers 15A and 15C penetrate into the microporous layers 14A and 14C, respectively.

Specifically, by making the average fiber diameter dg of the fiber material contained in the diffusion substrate layers 15A and 15C larger than the average fiber diameter dm of the fibrous substance contained in the electrode catalyst layers 12A and 12C, the pores formed inside the gas diffusion layers 13A and 13C are larger than the pores formed inside the electrode catalyst layers 12A and 12C. Further, in the regions in which the diffusion substrate layers 15A and 15C penetrate into the microporous layers 14A and 14C, respectively, the pores formed in these regions are smaller than the pores formed inside the gas diffusion layers 13A and 13C and larger than the pores formed inside the electrode catalyst layers 12A and 12C. Therefore, the pores in the electrode catalyst layers 12A and 12C and in the gas diffusion layers 13A and 13C suitably vary in size.

Due to the average fiber diameter dg in the diffusion substrate layers 15A and 15C being 10 times or more and 150 times or less the average fiber diameter dm of the electrode catalyst layers 12A and 12C, the size of pores in the electrode catalyst layers 12A and 12C is appropriately balanced with the size of pores in the gas diffusion layers 13A and 13C. As a result, the membrane electrode assembly 10 has a suitable moisture state under both high and low humidification conditions, resulting in high power generation performance.

Specifically, for example, the following principles may be assumed. If the difference in pore size between the electrode catalyst layers 12A and 12C and the gas diffusion layers 13A and 13C is too small, the water generated when the fuel cell is operated at a high current under high humidification conditions is not sufficiently discharged, causing excessive water stagnation. On the other hand, when the average fiber diameter dg is 10 times or more the average fiber diameter dm, a sufficient difference in pore size is obtained between the electrode catalyst layers 12A and 12C and the gas diffusion layers 13A and 13C to ensure that the water generated under high humidification conditions is reliably discharged. Since this prevents gas diffusion from being hindered, a decrease in power generation performance can be suppressed.

Further, if the difference in pore size between the electrode catalyst layers 12A and 12C and the gas diffusion layers 13A and 13C is too large, water retention under low humidification conditions becomes insufficient. On the other hand, when the average fiber diameter dg is 150 times or less the average fiber diameter dm, a difference in pore size between the electrode catalyst layers 12A and 12C and the gas diffusion layers 13A and 13C does not become too large so that the water content in the polymer electrolyte membrane 11 is suitably maintained even under low humidification conditions. Since this prevents a decrease in proton conductivity, a decrease in power generation performance can be suppressed.

When the gas diffusion layers 13A and 13C include the first region composed of only the microporous layers 14A and 14C, the second region in which the diffusion substrate layers 15A and 15C penetrate into the microporous layers 14A and 14C, respectively, and the third region composed of only the diffusion substrate layers 15A and 15C, the following effects can be achieved. That is, the size of voids formed in the gas diffusion layers 13A and 13C increases in the order of the first region, the second region and the third region. Therefore, compared with the case where the gas diffusion layers 13A and 13C do not include the first region, the size of voids varies more gradually in a stepwise manner from the electrode catalyst layers 12A and 12C toward a surface of the gas diffusion layers 13A and 13C on a side opposite to that facing away from the electrode catalyst layers 12A and 12C. This ensures that the substances involved in electrode reactions can be more smoothly supplied and discharged. As a result, the above effects due to the average fiber diameter dg being 10 times or more and 150 times or less the average fiber diameter dm can be more suitably achieved.

Furthermore, when only one of the electrode catalyst layer 12A and the electrode catalyst layer 12C contains the fibrous substance, the average fiber diameter dg may be 10 times or more and 150 times or less the average fiber diameter dm in the gas diffusion layer laminated on the electrode catalyst layer containing the fibrous substance.

### [Polymer Electrolyte Fuel Cell]

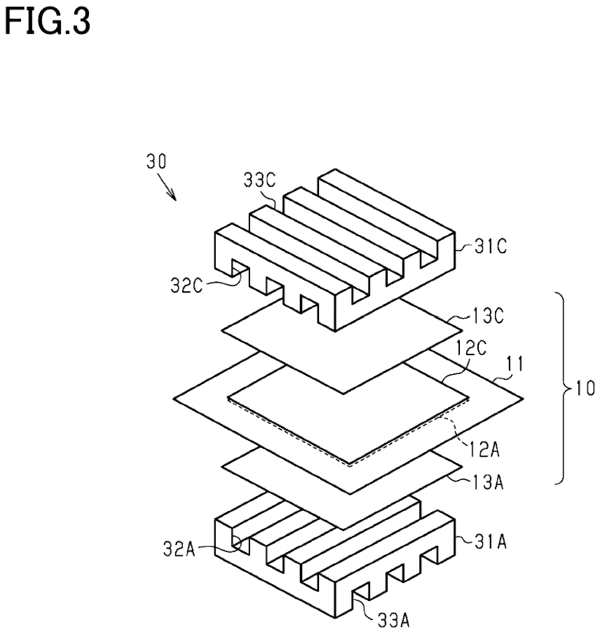

With reference to Fig. 3, a configuration of the polymer electrolyte fuel cell including the above membrane electrode assembly 10 will be described.

As shown in Fig. 3, a polymer electrolyte fuel cell 30 includes the membrane electrode assembly 10 and a pair of separators 31A and 31C. The membrane electrode assembly 10 is sandwiched between the separators 31A and 31C.

The separators 31A and 31C are made of a material electrically conductive and impermeable to gas. The separator 31A faces the gas diffusion layer 13A, and the separator 31C faces the gas diffusion layer 13C. A surface of the separator 31A which faces the gas diffusion layer 13A is provided with a gas flow channel 32A, and a surface facing away from the gas diffusion layer 13A is provided with a cooling water channel 33A. Similarly, a surface of the separator 31C which faces the gas diffusion layer 13C is provided with a gas flow channel 32C, and a surface facing away from the gas diffusion layer 13C is provided with a cooling water channel 33C.

In use of the polymer electrolyte fuel cell 30, a fuel gas such as hydrogen flows through the gas flow channel 32A of the separator 31A, and an oxidant gas such as oxygen flows through the gas flow channel 32C of the separator 31C. Further, cooling water flows through the cooling water channels 33A and 33C of the respective separators 31A and 31C. As the fuel gas is supplied from the gas flow channel 32A to the fuel electrode and the oxidant gas is supplied from the gas flow channel 32C to the air electrode, electrode reactions proceed to thereby generate an electromotive force between the fuel electrode and the air electrode. Further, an organic fuel such as methanol may also be supplied to the fuel electrode.

The polymer electrolyte fuel cell 30 may be used as a single cell as shown in Fig. 3, or may be used as a single fuel cell in which a plurality of polymer electrolyte fuel cells 30 are laminated and connected in series. The polymer electrolyte fuel cell 30 may further include, in addition to the above members, a gasket or the like for suppressing gas leakage.

### [Method of Producing Membrane Electrode Assembly]

A method of producing a membrane electrode assembly 10 will be described below.

The electrode catalyst layers 12A and 12C are formed by applying a coating liquid containing a material of the electrode catalyst layers 12A and 12C to the substrate to form a coating film, and drying the coating film.

The solvent of the coating liquid does not erode the catalyst-supporting particles, the polymer electrolyte and the fibrous substance, and dissolves the polymer electrolyte or disperses it as a fine gel. Examples of the solvent include alcohols, ketone-based solvents, ether-based solvents and polar solvents. Examples of the alcohols include methanol, ethanol, 1-propanol, 2-propanol, 1-butanol, 2-butanol, isobutyl alcohol, tert-butyl alcohol and pentanol. Examples of the ketone-based solvents include acetone, methyl ethyl ketone, pentanone, methyl isobuthyl ketone, heptanone, cyclohexanone, methyl cyclohexanone, acetonyl acetone and diisobutyl ketone. Examples of the ether-based solvents include tetrahydrofuran, dioxane, diethylene glycol dimethylether, anisole, methoxy toluene and dibutyl ether. Examples of the polar solvents include dimethylformamide, dimethylacetamide, N-methylpyrrolidone, ethylene glycol, diethylene glycol, diacetone alcohol and 1-methoxy-2-propanol. The solvent may contain water, which has high affinity with the polymer electrolyte.

When it is required to improve dispersibility of the catalyst-supporting particles, the coating liquid preferably contains a dispersant. Examples of the dispersant include anionic surfactants, cationic surfactants, amphoteric surfactants and nonionic surfactants. Further, when it is required to improve the dispersibility in the coating liquid, it is preferred that a dispersion treatment is performed during production of the coating liquid. Examples of the dispersion treatment include stirring with a ball mill or a roll mill, stirring with a shear mill, stirring with a wet mill, stirring with application of ultrasonic waves and stirring with a homogenizer.

From the viewpoint of suppressing occurrence of cracking on the surface of the electrode catalyst layers 12A and 12C, the solid content in the coating liquid is preferably 50 mass% or less. From the viewpoint of increasing the film formation rate of the electrode catalyst layers 12A and 12C, the solid content in the coating liquid is preferably 1 mass% or greater.

As the substrate for forming the electrode catalyst layers 12A and 12C, a transfer substrate which is peeled off after the electrode catalyst layers 12A and 12C are transferred onto the polymer electrolyte membrane 11 may be used. Examples of the material of the transfer substrate include fluororesins and organic polymer compounds other than fluororesins. Examples of the fluororesins include ethylene tetrafluoroethylene copolymers (ETFE), tetrafluoroethylene-hexafluoropropylene copolymers (FEP), tetrafluoroperfluoroalkyl vinyl ether copolymers (PFA) and polytetrafluoroethylene (PTFE). Examples of the organic polymer compounds include polyimides, polyethylene terephthalates, polyamides, polysulfones, polyethersulfones, polyphenylene sulfides, polyether ether ketones, polyetherimides, polyarylates and polyethylene naphthalates.

Alternatively, the substrate for forming the electrode catalyst layers 12A and 12C may be the polymer electrolyte membrane 11, or may be the gas diffusion layers 13A and 13C.

The method of applying a coating liquid to the substrate is not specifically limited. The coating liquid may be applied by, for example, doctor blading, dipping, screen printing, roll coating, or the like.

The gas diffusion layers 13A and 13C are formed by applying a coating liquid containing a material of the microporous layers 14A and 14C to surfaces of the diffusion substrate layers 15A and 15C, and drying the coating film. For example, the microporous layers 14A and 14C can be formed by applying a coating liquid containing carbon particles, a fluorine-based resin dispersant, a solvent and a surfactant to surfaces of the diffusion substrate layers 15A and 15C, and then drying it.

Further, the diffusion substrate layers 15A and 15C may be formed by applying a coating liquid containing a fluorine-based resin dispersion, a solvent and a surfactant to a carbon fiber substrate, and then drying it.

When the substrates for forming the electrode catalyst layers 12A and 12C are transfer substrates, the transfer substrates are peeled off from the electrode catalyst layers 12A and 12C after the electrode catalyst layers 12A and 12C are joined to the polymer electrolyte membrane 11 by thermocompression bonding. Then, the gas diffusion layers 13A and 13C are laminated on the electrode catalyst layers 12A and 12C on the polymer electrolyte membrane 11. Thus, the membrane electrode assembly 10 is formed.

When the substrates for forming the electrode catalyst layers 12A and 12C are the gas diffusion layers 13A and 13C, the electrode catalyst layers 12A and 12C supported by the gas diffusion layers 13A and 13C are joined to the polymer electrolyte membrane 11 by thermocompression bonding, and thus the membrane electrode assembly 10 is formed.

When the substrate for forming the electrode catalyst layers 12A and 12C is the polymer electrolyte membrane 11, the electrode catalyst layers 12A and 12C are formed directly on the surfaces of the polymer electrolyte membrane 11, and then the gas diffusion layers 13A and 13C are laminated on the electrode catalyst layers 12A and 12C. Thus, the membrane electrode assembly 10 is formed.

### [Examples]

The membrane electrode assembly and the polymer electrolyte fuel cell described above will be described below using specific examples and comparative examples.

### (Example 1)

### <Production of Electrode Catalyst Layer>

A coating liquid for forming an electrode catalyst layer was prepared by mixing catalyst-supporting particles, polymer electrolyte and fibrous substance described below in a solvent, and dispersing for 30 minutes using a planetary ball mill. As the solvent of the coating liquid, a mixed solvent of ultrapure water and 1-propanol was used. The volume ratio of ultrapure water and 1-propanol in the mixed solvent was 1:1. The blending ratio of each material in the coating liquid was such that, when the mass of the catalyst-supporting carrier was 1, the mass of the fibrous substance was 0.3 and the mass of the polymer electrolyte was 0.8. The coating liquid was prepared so that the solid content in the coating liquid was 12 mass%.

- Catalyst-supporting particles: Platinum-on-carbon particles (TEC10E50E, Tanaka Kikinzoku Kogyo K.K.)
- Fibrous substance: Carbon fiber (average fiber diameter: 0.15 µm)
- Polymer electrolyte: Fluorine-based polymer electrolyte (Nafion (registered trademark) dispersion liquid, Wako Pure Chemical Industries, Ltd.)

A polytetrafluoroethylene (PTFE) sheet was used as a transfer substrate, and the coating liquid was applied to the transfer substrate by doctor blading to form a coating film, which was dried in an air atmosphere at 80°C. Thus, an electrode catalyst layer was obtained.

When forming the electrode catalyst layer of the fuel electrode, the amount of coating liquid applied was adjusted so that the amount of platinum supported was 0.1 mg/cm². Further, when forming the electrode catalyst layer of the air electrode, the amount of coating liquid applied was adjusted so that the amount of platinum supported was 0.3 mg/cm².

### <Production of Membrane Electrode Assembly>

The electrode catalyst layer on the transfer substrate was punched into a square with a side length of 5 cm. The punched electrode catalyst layer of the fuel electrode was transferred from the transfer substrate onto one surface of the polymer electrolyte membrane, and the punched electrode catalyst layer of the air electrode was transferred from the transfer substrate onto the other surface of the polymer electrolyte membrane. In transfer of the electrode catalyst layer, hot pressing was performed at a temperature of 130°C and a pressure of 5.0×10⁶ Pa. The polymer electrolyte membrane used was a fluorine-based polymer electrolyte (Nafion (registered trademark) 211, manufactured by DuPont). The thickness of the polymer electrolyte membrane was 25 µm.

A gas diffusion layer obtained by coating a carbon paper as a diffusion substrate layer with a microporous layer was bonded to each of the electrode catalyst layers of the fuel electrode and the air electrode. The average fiber diameter of the carbon paper was 3 µm, and a fiber diameter ratio (dg/dm) of the average fiber diameter dg of the diffusion substrate layer in the gas diffusion layer to the average fiber diameter dm of the fibrous substance in the electrode catalyst layer was 20. The conductive material contained in the microporous layer was the same carbon particles as the carrier of the catalyst-supporting particles.

Thus, a membrane electrode assembly of Example 1 was obtained.

### (Example 2)

A membrane electrode assembly of Example 2 was obtained using the same material and the same steps as in Example 1 except that the diffusion substrate layer was changed to a carbon paper having an average fiber diameter of 6 µm and the fiber diameter ratio (dg/dm) was 40.

### (Example 3)

A membrane electrode assembly of Example 3 was obtained using the same material and the same steps as in Example 1 except that the diffusion substrate layer was changed to a carbon paper having an average fiber diameter of 22 µm and the fiber diameter ratio (dg/dm) was 146.

### (Example 4)

A membrane electrode assembly of Example 4 was obtained using the same material and the same steps as in Example 1 except that the fibrous substance contained in the electrode catalyst layer was changed to proton-conducting electrolyte fibers having an average fiber diameter of 0.2 µm and the fiber diameter ratio (dg/dm) was 15. The material of the electrolyte fibers was a fluorine-based polymer electrolyte (Nafion (registered trademark), manufactured by DuPont).

### (Example 5)

A membrane electrode assembly of Example 5 was obtained using the same material and the same steps as in Example 4 except that the diffusion substrate layer was changed to a carbon paper having an average fiber diameter of 6 µm and the fiber diameter ratio (dg/dm) was 30.

### (Example 6)

A membrane electrode assembly of Example 6 was obtained using the same material and the same steps as in Example 4 except that the diffusion substrate layer was changed to a carbon paper having an average fiber diameter of 22 µm and the fiber diameter ratio (dg/dm) was 110.

### (Example 7)

A membrane electrode assembly of Example 7 was obtained using the same material and the same steps as in Example 1 except that the fibrous substance contained in the electrode catalyst layer was changed to polymer fibers having cationic exchange groups (sulfonic acid group added) having an average fiber diameter of 0.2 µm and the fiber diameter ratio (dg/dm) was 15. The material of the polymer fibers had properties of adsorbing ionomers, and the amount of ionomers adsorbed was found to be 10 mg or more per 1 g of fibers.

### (Example 8)

A membrane electrode assembly of Example 8 was obtained using the same material and the same steps as in Example 7 except that the diffusion substrate layer was changed to a carbon paper having an average fiber diameter of 6 µm and the fiber diameter ratio (dg/dm) was 30.

### (Example 9)

A membrane electrode assembly of Example 9 was obtained using the same material and the same steps as in Example 7 except that the diffusion substrate layer was changed to a carbon paper having an average fiber diameter of 22 µm and the fiber diameter ratio (dg/dm) was 110.

### (Example 10)

A membrane electrode assembly of Example 10 was obtained using the same material and the same steps as in Example 1 except that the fibrous substance contained in the electrode catalyst layer was changed to polymer fibers having cationic exchange groups (amino group added) having an average fiber diameter of 0.2 µm and the fiber diameter ratio (dg/dm) was 15. The material of the polymer fibers had properties of adsorbing ionomers, and the amount of ionomers adsorbed was found to be 10 mg or more per 1 g of fibers.

### (Example 11)

A membrane electrode assembly of Example 11 was obtained using the same material and the same steps as in Example 10 except that the diffusion substrate layer was changed to a carbon paper having an average fiber diameter of 6 µm and the fiber diameter ratio (dg/dm) was 30.

### (Example 12)

A membrane electrode assembly of Example 12 was obtained using the same material and the same steps as in Example 10 except that the diffusion substrate layer was changed to a carbon paper having an average fiber diameter of 22 µm and the fiber diameter ratio (dg/dm) was 110.

### (Example 13)

A membrane electrode assembly of Example 13 was obtained using the same material and the same steps as in Example 1 except that the fibrous substance contained in the electrode catalyst layer was changed to polymer fibers having cationic exchange groups (hydroxyl group added) having an average fiber diameter of 0.2 µm and the fiber diameter ratio (dg/dm) was 15. The material of the polymer fibers had properties of adsorbing ionomers, and the amount of ionomers adsorbed was found to be 10 mg or more per 1 g of fibers.

### (Example 14)

A membrane electrode assembly of Example 14 was obtained using the same material and the same steps as in Example 13 except that the diffusion substrate layer was changed to a carbon paper having an average fiber diameter of 6 µm and the fiber diameter ratio (dg/dm) was 30.

### (Example 15)

A membrane electrode assembly of Example 15 was obtained using the same material and the same steps as in Example 13 except that the diffusion substrate layer was changed to a carbon paper having an average fiber diameter of 22 µm and the fiber diameter ratio (dg/dm) was 110.

### (Comparative Example 1)

A membrane electrode assembly of Comparative Example 1 was obtained using the same material and the same steps as in Example 1 except that the diffusion substrate layer was changed to a carbon paper having an average fiber diameter of 1.2 µm and the fiber diameter ratio (dg/dm) was 8.

### (Comparative Example 2)

A membrane electrode assembly of Comparative Example 2 was obtained using the same material and the same steps as in Example 1 except that the diffusion substrate layer was changed to a carbon paper having an average fiber diameter of 35 µm and the fiber diameter ratio (dg/dm) was 233.

### (Comparative Example 3)

A membrane electrode assembly of Comparative Example 3 was obtained using the same material and the same steps as in Example 4 except that the diffusion substrate layer was changed to a carbon paper having an average fiber diameter of 1.2 µm and the fiber diameter ratio (dg/dm) was 6.

### (Comparative Example 4)

A membrane electrode assembly of Comparative Example 4 was obtained using the same material and the same steps as in Example 4 except that the diffusion substrate layer was changed to a carbon paper having an average fiber diameter of 35 µm and the fiber diameter ratio (dg/dm) was 175.

### <Method of Evaluating Power Generation Performance>

For each of the examples and comparative examples, the membrane electrode assembly was placed in a power generation evaluation cell to form a polymer electrolyte fuel cell, and a current-voltage was measured using a fuel cell measurement device under two operating conditions with different humidification conditions. The current-voltage measurement conditions and operating conditions were as follows.

### <Measurement Conditions>

- Fuel gas: Hydrogen
- Oxidant gas: Air
- Cell temperature: 80°C
- Control back pressure: 50 kPa

### <Operating Condition 1>

- Relative humidity of fuel electrode: 100%RH
- Relative humidity of oxygen electrode: 100%RH

### <Operating Condition 2>

- Relative humidity of fuel electrode: 30%RH
- Relative humidity of oxygen electrode: 30%RH

In each of the operating condition 1, which is a high-load operation, and the operating condition 2, which is a low-load operation, the gas flow rate was controlled so that the fuel utilization rate became constant. The fuel utilization rate was a flow rate of reacting fuel gas relative to a flow rate of supplied fuel gas. The fuel utilization rate was determined by dividing the hydrogen consumption rate calculated from the current value by the hydrogen flow rate of the supplied fuel gas.

### (Evaluation Results)

Table 1 shows the material and average fiber diameter dm of the fibrous substance, the average fiber diameter dg of the diffusion substrate layer in the gas diffusion layer, the fiber diameter ratio (dg/dm), and the evaluation result of power generation performance for each of the examples and comparative examples. The evaluation result of power generation performance was rated as "good" when a voltage was 0.65 V or higher at a current density of 2.0 A/cm² and rated as "poor" when a voltage was less than 0.65 V at a current density of 2.0 A/cm².

**[Table 1]**

| | Fibrous substance | | Gas diffusion layer | Fiber diameter ratio (dg/dm) | Power generation performance | |
|---|---|---|---|---|---|---|
| | Material | Fiber dia. (dm) | Fiber dia. (dg) | | Operating condition 1 | Operating condition 2 |
| Ex.1 | Carbon fiber | 0.15 | 3 | 20 | Good | Good |
| Ex.2 | Carbon fiber | 0.15 | 6 | 40 | Good | Good |
| Ex.3 | Carbon fiber | 0.15 | 22 | 146 | Good | Good |
| Ex.4 | Electrolyte fiber | 0.2 | 3 | 15 | Good | Good |
| Ex.5 | Electrolyte fiber | 0.2 | 6 | 30 | Good | Good |
| Ex.6 | Electrolyte fiber | 0.2 | 22 | 110 | Good | Good |
| Ex. 7 | Polymer fiber (sulfonic acid group added) | 0.2 | 3 | 15 | Good | Good |
| Ex. 8 | Polymer fiber (sulfonic acid group added) | 0.2 | 6 | 30 | Good | Good |
| Ex.9 | Polymer fiber (sulfonic acid group added) | 0.2 | 22 | 110 | Good | Good |
| Ex. 10 | Polymer fiber (amino group added) | 0.2 | 3 | 15 | Good | Good |
| Ex.11 | Polymer fiber (amino group added) | 0.2 | 6 | 30 | Good | Good |
| Ex.12 | Polymer fiber (amino group added) | 0.2 | 22 | 110 | Good | Good |
| Ex. 13 | Polymer fiber (hydroxyl group added) | 0.2 | 3 | 15 | Good | Good |
| Ex. 14 | Polymer fiber (hydroxyl group added) | 0.2 | 6 | 30 | Good | Good |
| Ex. 15 | Polymer fiber (hydroxyl group added) | 0.2 | 22 | 110 | Good | Good |
| Comp. Ex.1 | Carbon fiber | 0.15 | 1.2 | 8 | Poor | Good |
| Comp.Ex.2 | Carbon fiber | 0.15 | 35 | 233 | Poor | Poor |
| Comp.Ex.3 | Electrolyte fiber | 0.2 | 1.2 | 6 | Poor | Good |
| Comp.Ex.4 | Electrolyte fiber | 0.2 | 35 | 175 | Good | Poor |

As seen from Table 1, in Examples 1 to 15, in which the fiber diameter ratio (dg/dm) was 10 or more and 150 or less, the power generation performance was good under both operating condition 1, which is a high humidification condition, and operating condition 2, which is a low humidification condition.

On the other hand, in Comparative Examples 1 and 3, in which the fiber diameter ratio (dg/dm) was less than 10, the power generation performance was good under the low humidification condition and poor under the high humidification condition. This shows that, in Comparative Examples 1 and 3, in which the difference in pore size between the electrode catalyst layer and the gas diffusion layer was small, water discharge was insufficient under the high humidification condition and gas diffusion was hindered, resulting in poor power generation performance.

Further, in Comparative Examples 2 and 4, in which the fiber diameter ratio (dg/dm) exceeded 150, the power generation performance was poor under the low humidification condition. This shows that, in Comparative Examples 2 and 4, in which the difference in pore size between the electrode catalyst layer and the gas diffusion layer was large, water retention was insufficient under the low humidification condition and proton conduction was hindered, resulting in poor power generation performance. Further, although Comparative Example 4 had good power generation performance under the high humidification condition, Comparative Example 2, in which the fiber diameter ratio (dg/dm) was particularly large, had poor power generation performance even under the high humidification condition. This shows that, when the difference in pore size between the electrode catalyst layer and the gas diffusion layer was too large, generated water did not smoothly flow from the electrode catalyst layer to the gas diffusion layer under the high humidification condition, which may cause water stagnation.

As described above using the examples, according to the membrane electrode assembly and the polymer electrolyte fuel cell of the above embodiment, the following effects can be obtained.
(1) The average fiber diameter dg of the fiber material in the gas diffusion layers 13A and 13C is 10 times or more and 150 times of less the average fiber diameter dm of the fibrous substance contained in the electrode catalyst layers 12A and 12C. With this configuration, the size of pores in the electrode catalyst layers 12A and 12C is appropriately balanced with the size of pores in the gas diffusion layers 13A and 13C. As a result, the membrane electrode assembly 10 has a suitable moisture state under both high and low humidification conditions, resulting in high power generation performance.
(2) The gas diffusion layers 13A and 13C include the first region composed of only the microporous layers 14A and 14C, the second region in which the diffusion substrate layers 15A and 15C penetrate into the microporous layers 14A and 14C, respectively, and the third region composed of only the diffusion substrate layers 15A and 15C. With this configuration, the size of voids in the electrode catalyst layers 12A and 12C and in the gas diffusion layers 13A and 13C varies more gradually in a stepwise manner. This ensures that the substances involved in electrode reactions can be more smoothly supplied and discharged. Therefore, the effect of the above (1) can be more suitably obtained.

### [Reference Signs List]

- 10: Membrane electrode assembly
- 1 1: Polymer electrolyte membrane
- 12A, 12C: Electrode catalyst layer
- 13A, 13C: Gas diffusion layer
- 14A, 14C: Microporous layer
- 15A, 15C: Diffusion substrate layer
- 21: First region
- 22: Second region
- 23: Third region
- 30: Polymer electrolyte fuel cell
- 31A, 31C: Separator

## Claims

1. A membrane electrode assembly comprising:
a polymer electrolyte membrane;
a pair of electrode catalyst layers disposed with the polymer electrolyte membrane therebetween, each of the pair of electrode catalyst layers being in contact with a surface of the polymer electrolyte membrane; and
a gas diffusion layer laminated on each of the pair of electrode catalyst layers, the gas diffusion layer including a microporous layer in contact with the electrode catalyst layer and a diffusion substrate layer made of a fiber substrate, wherein
at least one of the pair of electrode catalyst layers is a target catalyst layer containing catalyst-supporting particles, a polymer electrolyte and a fibrous substance,
the diffusion substrate layer penetrates into at least part of the microporous layer, and
in the gas diffusion layer laminated on the target catalyst layer, an average fiber diameter of a fiber material contained in the diffusion substrate layer is 10 times or more and 150 times or less of an average fiber diameter of the fibrous substance contained in the target catalyst layer.

2. The membrane electrode assembly according to claim 1, wherein
the gas diffusion layer includes a first region composed of only the microporous layer, a second region in which the diffusion substrate layer penetrates into the microporous layer, and a third region composed of only the diffusion substrate layer, and
the first region is in contact with the electrode catalyst layer, and the second region is sandwiched between the first region and the third region in a thickness direction of the gas diffusion layer.

3. The membrane electrode assembly according to claim 1 or 2, wherein
the fibrous substance contained in the target catalyst layer contains at least one of electron-conducting fibers and polymer fibers.

4. A polymer electrolyte fuel cell comprising:
the membrane electrode assembly according to claim 1; and
a pair of separators sandwiching the membrane electrode assembly.
